# EUROPEAN PATENT APPLICATION

(11) **EP 1 804 337 A1**
(43) Date of publication of application: **04.07.2007**
(21) Application number: 05793136.2
(22) Date of filing: 12.10.2005
(51) Int. Cl.: H01R 4/68

(54) **SUPERCONDUCTING CABLE CONNECTION STRUCTURE**

(30) Priority: 14.10.2004 JP 2004300573; 07.12.2004 JP 2004354692
(71) Applicant: Sumitomo Electric Industries, Ltd., Osaka-shi, Osaka 541-0041 (JP)
(72) Inventor: HIROSE, M., Osaka Works Sumitomo Elec. Ind., Ltd., Osaka-shi, Osaka 5540024 (JP); ASHIBE, Y., Osaka Works Sumitomo Elec. Ind., Ltd., Osaka-shi, Osaka 5540024 (JP)
(74) Representative: Joly, Jean-Jacques
(86) International application number: PCT/JP2005/018748
(87) International publication number: WO 2006/041070

(57) **Abstract**

A coupling structure of a superconducting cable is provided, in which a buckling of a superconducting layer can be suppressed, the buckling that is liable to occur when the superconducting layer and an outer peripheral layer disposed on an outer side thereof are displaced relative to each other in a longitudinal direction.

The coupling structure of a superconducting cable is formed at an end portion of the superconducting cable having the superconducting layer and the outer peripheral layer formed thereon. The superconducting layer (a conductor layer 30) is coupled to a coupling member (a coupling sleeve 210) . A holding member 220 covers the superconducting layer between an end portion of the coupling member and an end portion of the outer peripheral layer (an insulating layer 50). The holding member holds the superconducting layer so that the superconducting layer is prevented from being pushed in a longitudinal direction in a state in which the superconducting layer is in a direct contact with the outer peripheral layer, even when a relative movement occurs between the superconducting layer and the outer peripheral layer disposed on the outer side of the superconducting layer. Therefore, the buckling of the superconducting layer can be prevented.

## Description

### TECHNICAL FIELD

The present invention relates to a coupling structure of a superconducting cable. Particularly, the present invention relates to a coupling structure of a superconducting cable in which a buckling of a superconducting layer can be suppressed, such a buckling being liable to occur when the superconducting layer and an outer peripheral layer disposed on an outer side thereof are displaced relative to each other in a longitudinal direction.

### BACKGROUND ART

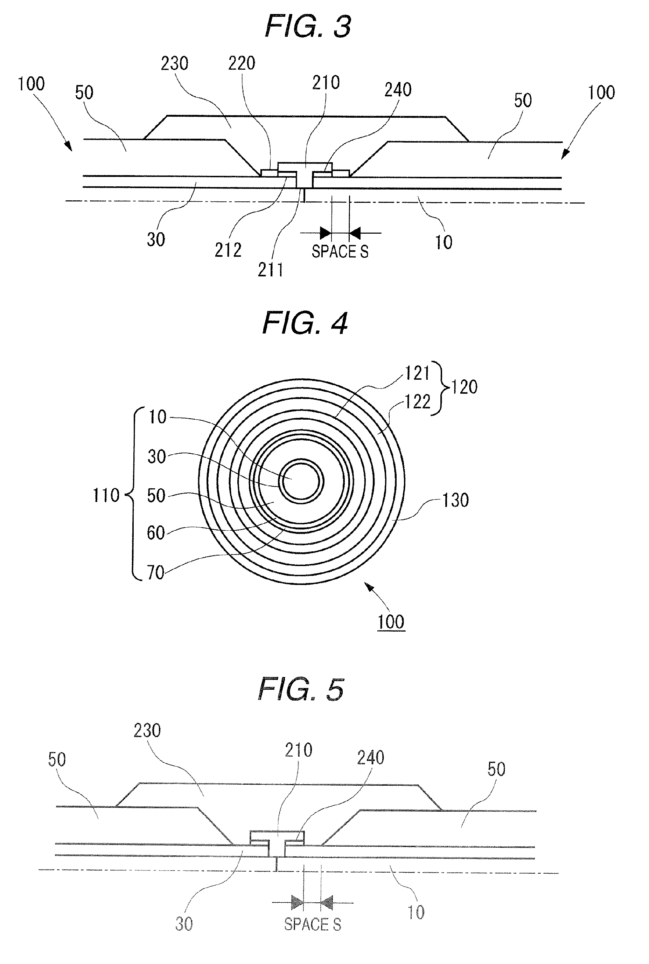

As a superconducting cable, there is proposed a single-core superconducting cable illustrated in Fig. 4. Fig. 4 is a cross-sectional view of the superconducting cable. The superconducting cable 100 is constructed such that a single cable core 110 is housed in a heat insulating tube 120.

The cable core 110 includes, in sequence from its center, a former 10, a conductor layer 30, an insulating layer 50, a shielding layer 60 and a protective layer 70. The conductor layer 30 is formed by spirally winding a superconducting wire material in layers on the former 10. Generally, a tape-like superconducting wire material is used in which a plurality of filaments made of an oxide superconducting material are arranged in a matrix such as a silver sheath. The insulating layer 50 is formed by winding an insulating paper such as a semi-synthetic insulating paper. The shielding layer 60 is formed by spirally winding a superconducting wire material that is similar to the one used in the conductor layer 30 on the insulating layer 50. As for the protective layer 70, an insulating paper or the like is used.

On the other hand, the heat insulating tube 120 includes a heat insulating material (not shown) arranged between double layered tubes which are an inner tube 121 and an outer tube 122, and interiors of the double layered tubes are evacuated. A corrosion-proof layer 130 is formed on an outer side of the heat insulating tube 120. A cooling medium such as liquid nitrogen is filled and circulated inside the former 10 and through a space formed between the inner tube 121 and the core 110, and it is used in a state in which the insulating layer 50 is impregnated with the cooling medium.

A technique shown in Fig. 5 is known as an intermediate coupling portion of such a superconducting cable (see, e.g., Patent Document 1 for a similar technique). In the coupling portion, first, each of the layers is removed in a stepped manner at respective end portions of cables where they are butted and coupled, thereby exposing the conductor layer 30 and the former 10 stepwise. The respective formers 10 are then inserted into a coupling sleeve 210, and are press-clamped. The coupling sleeve 210 is a metal tube having a former insertion hole formed at a middle portion thereof and conductor insertion holes formed at respective end portions thereof. The conductor insertion holes have larger inner diameter than the former insertion hole. The press-clamping coupling of the formers is performed by compressing the former insertion hole, and the conductor layers 30 that are exposed in a stepped manner are not inserted in the former insertion hole, but are inserted in the conductor insertion holes with a gap. The conductor layers 30 are not coupled by press-clamping because superconducting characteristic becomes low when the superconducting wire material is compressed. Therefore, the conductor layers 30 and the coupling sleeve 210 are coupled together by pouring a solder 240 into gaps between the conductor insertion holes and the conductor layers 30. When pouring the solder 240 inside the coupling sleeve 210, it is necessary to heat the entire coupling sleeve 210 so that the solder 240 can be distributed in just proportion over the conductor layer 30.

In order to perform such a soldering, a space S is usually provided between the end portion of the coupling sleeve 210 and the end portion of the insulating layer 50. As the insulating layer 50 of the superconducting cable, a semi-synthetic paper is used in which, for example, a polypropylene material and an insulating paper are laminated. Without the space S, the end portion of the insulating layer 50 might contact or become very close to the solder 240, and since the total amount of heat of the coupling sleeve 21 including the solder 240 is large, there is a fear that the polypropylene may be melted by a melting heat of the solder 240, whereby insulating performance is degraded.

When the coupling of the formers 10 and conductor layers 30 is finished via the coupling sleeve 210, an insulating tape such as a semi-synthetic paper is wound on the vicinity of the outer periphery of the coupling sleeve 210, that is, over a range from the vicinity of the end portion of the insulating layer of one cable to the vicinity of the end portion of the insulating layer of the other cable, thereby forming a reinforcing insulating layer 230.
Patent Document 1: Japanese Patent Unexamined Publication JP-A-11-121059 (Fig. 9)

### DISCLOSURE OF THE INVENTION

### PROBLEMS TO BE SLOVED BY THE INVENTION

However, in the above described coupling structure, the superconducting wire material is sometimes buckled due to a thermal expansion or contraction of the cable.

The superconducting cable thermally contracts when the superconducting wire material is cooled by the cooling medium, and an expansion occurs when it is returned to a normal temperature. Since the respective layers of the cables are different in constituent materials, and are discrete in a radial direction, a relative movement in the longitudinal direction may occur between the layers due to a difference in thermal contraction amounts of the layers. For example, when the superconducting cable is cooled, the superconducting wire material that is spirally wound to form the conductor layer contracts and undergoes a tensile stress, and therefore, it moves in a direction in which the twisting is tightened, that is, in a direction in which the diameter becomes small. In contrast, when the superconducting cable is returned to normal temperature, the superconducting wire material moves in a direction in which the twisting thereof is loosened. On the other hand, the degree of expansion and contraction due to a temperature change is smaller in the insulating layer which formed on the outer side of the conductor layer as compared with the superconducting wire material. Therefore, when the cooling of the superconducting cable to a very low temperature and the returning of the superconducting cable to normal temperature are repeated, a relative movement between the conductor layer and the insulating layer in the longitudinal direction gradually occurs. Although the conductor layer is held toward the inner periphery side by the reinforcing insulating layer, the reinforcing insulating layer does not move together with the conductor layer for a similar reason given in the case of the insulating layer. Therefore, the reinforcing insulating layer lacks the function of suppressing the relative movement.

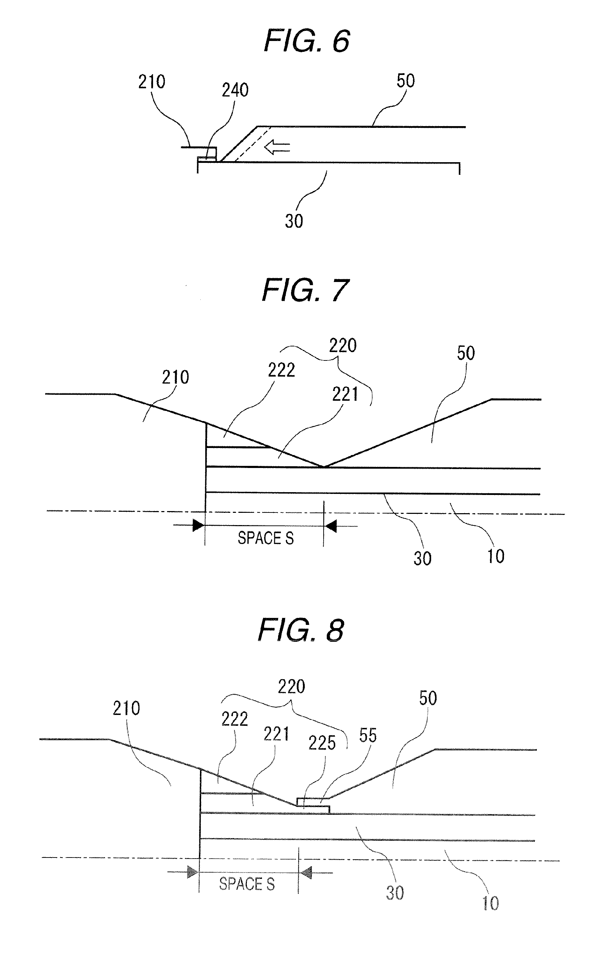

Particularly at the coupling portion of the superconducting cable, the end portion of the insulating layer 50 is likely move toward the coupling sleeve 210 (moves from a position shown in a broken line to a position shown in a solid line) in Fig. 6, or in the opposite direction. During such a process, the space S (see Fig. 5) between the end portion of the coupling sleeve 210 and the end portion of the insulating layer 50 repeatedly decreases and increases, whereby a space is formed between the superconducting layer and the insulating layer, or the superconducting wire material is wrinkled, so that the superconducting material disposed at a region of the space S may be buckled. As a result, it is expected that the electrical and mechanical characteristics of the superconducting wire material are degraded and that, in the worst case, the superconducting wire material is broken.

The present invention has been made in view of the above circumstances, and its main object is to provide a coupling structure of a superconducting cable in which a buckling of a superconducting layer can be suppressed, the buckling being liable to occur when the superconducting layer and an outer peripheral layer disposed on an outer side thereof are displaced relative to each other in a longitudinal direction.

### MEANS FOR SOLVING THE PROBLEMS

The present invention achieves the above object by covering a superconducting layer disposed between a coupling member such as a coupling sleeve and an outer peripheral layer of a cable core such as an insulating layer, so as to hold the superconducting layer, thereby suppressing the buckling of the superconducting layer.

The present invention is directed to a coupling structure of a superconducting cable, the coupling structure being formed at an end portion of a superconducting cable having a superconducting layer and an outer peripheral layer formed thereon. It is characterized in that the coupling structure includes a coupling member coupled to the superconducting layer, and a holding member which covers the superconducting layer at a region between an end portion of the coupling member and an end portion of the outer peripheral layer so as to prevent a buckling of the superconducting layer due to a relative movement between the superconducting layer and the outer peripheral layer.

When forming a coupling portion of a superconducting cable having a superconducting layer such as a conductor layer and an outer peripheral layer such as an insulating layer, a space is formed between respective end portions of the superconducting layer and the outer peripheral layer. However, when a relative movement occurs between the superconducting layer and the outer peripheral layer due to a thermal contraction or other reasons, the space becomes narrower or wider, whereby the superconducting layer is buckled as described above. In the coupling structure according to the present invention, the superconducting layer disposed at a the spaced region is covered with the holding member, and therefore, even when a relative movement of the superconducting layer and the outer peripheral layer occurs, the superconducting layer is pressed toward an inner peripheral layer side disposed just beneath by the holding member. Therefore, a space in which the superconducting layer behaves in a radial direction is small, so that the superconducting layer will not lift off from the inner peripheral layer and will not be wrinkled above the inner peripheral layer, thereby suppressing the superconducting layer from being bent. Of course, even when the superconducting layer disposed at the spaced region is covered with the holding member, an exposed portion where it is not covered with the holding portion may be formed on the superconducting layer upon further application of thermal expansion or contraction. Even in such a case, the range of exposure of the superconducting layer can be made as small as possible as compared with the case where no holding member is provided, and it is effective in preventing the buckling of the superconducting layer.

The coupling structure according to the present invention will be described below in further detail.

First, the construction of the superconducting cables to be connected together by the structure of the present invention will be described.

The superconducting cable used in the coupling structure of the present invention has such a basic construction that it includes a superconducting layer, a insulating layer, and a heat insulating tube. In addition, generally, a former, a shielding layer and a protective layer are provided. In the present invention, the superconducting layer is a layer formed by the use of a superconducting wire material, and a representative example is a conductor layer. In a case where the shielding layer is also formed by a superconducting wire material, the shielding layer is also included in the superconducting layer.

In the above described cable, the former retains the conductor layer in a predetermined shape, and a pipe-like structure or a twisted wire structure may be adopted. A non-magnetic metal material such as copper and aluminum may be used as a material thereof. When the former is formed into a pipe-like structure, the interior of the former may be used as a flow passage for a cooling medium.

The conductor layer is formed, for example, by spirally winding wires that is made of a superconducting material on the former. As a specific example of the superconducting wire material, a tape-like material may be adopted in which a plurality of filaments made of a Bi2223-based oxide superconducting material is provided in a matrix such as a silver sheath. The superconducting wires may be wound in a single layer or a plurality of layers. In case of the multi-layer structure, an interlayer insulating layer may be provided. For example, the interlayer insulating layer may be provided by winding an insulating paper such as a kraft paper, or a semi-synthetic paper such as PPLP (manufactured by Sumitomo Electric Industries, Ltd., registered trademark).

It is preferable that the insulating layer be formed by winding a semi-synthetic paper such as PPLP (registered trademark of Sumitomo Electric Industries, Ltd.) in which a polypropylene material and a kraft paper are laminated, or an insulating paper such as a kraft paper. A semi-conductive layer may be formed on at least one of inner and outer peripheries of the insulating layer, that is, between the conductor layer and the insulating layer or between the insulating layer and the shielding layer. When the former (inner) semi-conductive layer and/or the latter (outer) semi-conductive layer are/is formed, an adhesiveness between the conductor layer and the insulating layer and/or an adhesiveness between the insulating layer and the shielding layer are/is enhanced, thereby suppressing deterioration due to a generation of partial discharge.

It is preferable that the shielding layer be formed on an outer side of the insulating layer. When the shielding layer is provided, magnetic field of alternating current flowing through the conductor layer can be prevented form leaking outside. The shielding layer can be formed by a conductive material, and may be formed by winding a superconducting wire material that is similar to the one used in the conductor layer on an outer side of the insulating layer.

It is preferable that the protective layer be formed on an outer side of the shielding layer. The protective layer covers the shielding layer so as to mainly provide mechanical protection for the shielding layer. For example, the protective layer may be formed by winding an insulating paper such as a kraft paper on the shielding layer.

Further, a cushioning layer may be interposed between the former and the conductor layer. The cushioning layer avoids a direct metal-to-metal contact between the former and the superconducting wire material, and prevents the superconducting wire material form damaging. Particularly when the former has the twisted wire structure, the cushioning layer also has the function of making the surface of the former more smooth. As a specific material for the cushioning layer, insulating paper or carbon paper may be suitably used.

On the other hand, the heat insulating tube may have a construction such that an insulating material is provided between double layered tubes formed by an outer tube and an inner tube, and a space between the inner tube and the outer tube is evacuated. At least the conductor layer is housed inside the inner tube, and a cooling medium such as liquid nitrogen is filled in the inner tube for cooling the superconducting layer.

Next, a coupling structure for coupling such superconducting cables will be described.

The coupling structure according to the present invention is a coupling structure in which the superconducting layers are coupled together via a coupling member. For example, the conductor layers exposed by removing the relevant portion in a stepped manner are coupled together via the coupling member, and the periphery of the coupling member is covered with a reinforcing insulating layer.

One example of the coupling member is a coupling sleeve. More specifically, the coupling sleeve is a metal tube having a former insertion hole at a middle portion thereof and conductor insertion holes at respective end portions thereof. The conductor insertion holes are larger in inner diameter than the former insertion hole. The coupling between the formers as well as the coupling between the conductor layers are performed by using the coupling sleeve. Using the coupling sleeve, the formers are inserted in the former insertion hole so as to be butted to each other, and are coupled by compression. On the other hand, the conductor layers are not inserted into the former insertion hole, but are inserted into the respective conductor insertion holes, and may be coupled thereto by soldering. When coupling the shielding layers, a braided material may be suitably used as a coupling member.

When forming the coupling portion, the end portion of each of the superconducting cables is removed in a stepped manner, whereby a space is formed between the end portion of the coupling sleeve into which the conductor layers are inserted and the end portion of the insulating layer, and the conductor layer is exposed at the spaced region. In another case, a space is formed between an end portion of the braided material to which the shielding layer is coupled and an end portion of the protective layer, and the shielding layer is exposed at the spaced region. Such a exposed portion is covered with a holding member.

A resin, a metal wire or a tape material may be suitably used as the holding member. For example, an FRP (Fiber Reinforced Plastics) may arranged and set at the exposed portion, or a semi-conductive tape material may be wound on the exposed portion. Further, a metal wire or a tape material, or both of the metal wire and the tape material may be wound. As the FRP, various materials having a fiber material mixed in a base resin may be used.

The base resin may be an epoxy resin or a polyester resin. Particularly, it is preferable to use a thermosetting resin having a setting temperature that is lower than a melting point of the material used to form the insulating layer (e.g., polypropylene), in order to prevent the insulating layer from being damaged when forming the holding member. Carbon fibers, glass fibers may be suitably used as the fiber material.

The semi-conductive tape material may a carbon roll paper or a crepe carbon roll paper.

A copper wire or an aluminum wire may be used as the metal wire. A resin tape or a metal tape may be used as the tape material. When using the metal wire or the metal tape, after winding the metal wire or the metal tape on the exposed portion, it may be fixed to the exposed conductor layer by soldering, whereby the buckling of the conductor layer can be effectively suppressed. With respect to solder, it is preferable that a low-melting solder be used so as to suppress the deterioration of the insulating layer by heat transfer. For example, when PPLP (registered trademark of Sumitomo Electric Industries, Ltd.) is used as the insulating layer, the holding member is fixed to the conductor layer by using a low-melting solder having a melting point that is lower than a melting point (165°C to 176°C) of polypropylene of the PPLP (for example, a low-melting solder having a melting point of about 79°C and having a chemical composition such that Sn: 17.0 mass %, In: 26.0 mass %, Bi: 57.0 mass %). In the case of the metal tape, a silver tape, a copper tape, an aluminum tape, a stainless tape or the like may be preferably used. The silver tape exhibits good adhesion to solder, and is excellent in flexibility. In a case where a tape that has poor adhesion to solder is used, it is preferable to be plated with silver or tin so as to enhance the adhesion to solder. The tape material can tighten the portion on which it is wound, so that the superconducting layer can be held toward the inner periphery, thereby effectively suppressing the buckling thereof. When the metal wire or the metal tape is used as the holding member, it is preferred that the cushioning layer be interposed between the holding member and the superconducting layer. By interposing the cushioning layer, the metal-to-metal contact is avoided, thereby suppressing a damage to the superconducting wire material.

When the holding member is formed by the metal wire or the metal tape, it may be formed into a metal tape winding structure or a metal wire winding structure. It may be formed into a double layered structure including both the metal tape-winding structure and the metal wire winding structure.

When forming the coupling portion, there is a fear that a step (for example, a step having a right-angled corner portion) is formed between the coupling sleeve and the conductor layer projecting from the sleeve. An electric field concentrates on the step portion, and as a result, there is a possibility that the insulation of the step portion is destroyed, thereby providing a weak point of the insulation. In order to relieve the concentration of the electric field on the step portion, it is preferable that the holding member be formed into a shape that tapers from the sleeve toward the outer peripheral layer (a tapered shape). It is preferable that the surface of the winding structure that is formed into the tapered shape be smooth. Similarly, it is preferable that the end portion of the insulating layer be formed into a shape that tapers toward the coupling member (toward the sleeve) in order to relieve the concentration of the electric field.

The holding member may be formed by either one of the metal tape or the metal wire. However, when it is formed by the metal tape, the surface of the tapering winding structure is formed into a stair-like shape because of the thickness of the metal tape and the winding of the metal tape, and it is difficult to form the surface of the winding structure into a smooth surface. When the holding member is formed by the metal wire, the surface of the tapering winding structure can be easily formed into a smooth surface, but the winding number increases so that the efficiency of the operation is low. Therefore, taking the operation efficiency and the shape-forming ability into consideration, it is preferable that the holding member is formed into a double layered structure. For example, the metal tape may be wound on the conductor layer, and thereafter, the metal wire having a diameter that is smaller than a thickness of the steps formed due to the thickness of the metal tape or the winding number of the metal tape may be wound.

In the coupling portion structure, the portion to be covered with the holding member is the portion of the superconducting layer where it is liable to be buckled by a relative movement of the superconductor layer and the outer peripheral layer formed thereon. Normally, it is sufficient if only the exposed portion of the superconducting layer between the end portion of the coupling member and the end portion of the outer peripheral layer is covered with the holding member. The conductor layer may be covered over a wider range, for example, the portion where the conductor layer is inserted in the conductor insertion hole of the coupling sleeve may also be covered. In such a case, since the coupling sleeve and the holding member are soldered to each other, the metal tape may be suitably used as the holding member. In another case, the holding member may be formed to extend to the end portion of the insulating layer or at least the end portion of the coupling sleeve. Further, the holding member may be formed to extend to both surfaces of the insulating layer and the coupling sleeve.

After the superconducting layers are coupled together by the coupling member, the reinforcing insulating layer is formed to cover the coupling sleeve, the holding members and the end portions of the insulating layers. The reinforcing insulating layer is formed by winding an insulating paper around the periphery of the coupling member, for example, over a range from the vicinity of the end portion of the insulating layer of one cable to the vicinity of the end portion of the insulating layer of the other cable. Due to the formation of the reinforcing insulating layer, sufficient insulation is secured around the coupling member. In this case, there is a possibility that a relative displacement may occur between the reinforcing insulating layer and the coupling sleeve due to the difference in the thermal contraction amounts of the constituent materials, whereby the exposed portion of the conductor layer increases and the exposed conductor layer is buckled.

Therefore, for the purpose of suppressing the buckling due to the relative displacement between the conductor layer and the insulating layer and the relative movement between the conductor layer and the reinforcing insulating layer, the holding member may be formed to extend to the underside of the end portion of the outer peripheral layer. More specifically, in the superconducting cable having only the insulating layer, the holding member may be formed to partially extend to the underside of the insulating layer, if electric stress due to the holding member forming process and the structure of the insulating layer after the formation of the holding member are within an allowable range. In a case where the insulating layer has a winding structure, part of the insulating layer is unwound to form the holding member so as to be extended, if the electric stress due to the holding member forming process and the structure of the insulating layer after the formation of the holding member are within the allowable range. In the superconducting cable having an inner semi-conductive layer formed under the insulating layer, the holding member is formed under the inner semi-conductive layer. More specifically, in a case where the inner semi-conductive layer has a winding structure, part of the inner semi-conductive layer is unwound so as to form the holding member to be extended. In a case where the superconducting cable has the inner semi-conductive layer and where both the insulating layer and the inner semi-conductive layer have winding structures, part of the inner semi-conductive layer as well as part of the insulating layer may be unwound so as to form the holding member to be extended, if the electric stress due to the holding member-forming process and the structure of the insulating layer after the formation of the holding member are within the allowable range.

The coupling portion according to the present invention can be applied not only for a connection between single-core cables but also for a connection between respective cores of multicoaxial cables. It is particularly suitable to be applied to the single-core cables. Generally, in case of multicoaxial cables (e.g., tri-coaxial cables), each of the cores are loosely twisted together so that the cores themselves behave upon contraction at the time of cooling. Therefore, the problem with respect to the buckling of the superconducting layer due to the relative movement of the superconducting layer and the outer peripheral layer is more liable to occur with the single-core cables. Further, the present invention can be applied to a coupling portion of either AC superconducting cables or DC superconducting cables.

Furthermore, the structure according to the present invention can be applied not only to an intermediate coupling portion but also to a terminal coupling portion in so far as it has such a construction that a space is formed between an end portion of a coupling member and an end portion of an outer peripheral layer, and a superconducting layer is disposed at the spaced region.

### ADVANTAGE OF THE INVENTION

According to the superconducting cable coupling structure of the present invention, the following advantages can be achieved.
(1) Even when a relative movement of the superconducting layer and the outer peripheral layer (e.g., the insulating layer) disposed on the outer side thereof occurs, a space in which the superconducting layer behaves in the radial direction can be made small since the superconducting layer is held by the holding member. Therefore, the superconducting layer is prevented from lifting from the inner peripheral layer or wrinkling above the inner peripheral layer, whereby the buckling of the superconducting layer can be prevented.

### BRIEF DESCRIPTION OF THE DRAWINGS

[Fig. 1] Fig. 1 is a transverse cross-sectional view of a superconducting cable used in a coupling structure according to the present invention.
[Fig. 2] Fig. 2 is a cross-sectional view of a core of the superconducting cable shown in Fig. 1.
[Fig. 3] Fig. 3 is a schematic cross-sectional view showing a part of the coupling structure according to the present invention.
[Fig. 4] Fig. 4 is a transverse cross-sectional view of a superconducting cable.
[Fig. 5] Fig. 5 is a schematic cross-sectional view showing a part of a conventional coupling structure of a superconducting cable.
[Fig. 6] Fig. 6 is an explanatory view showing a relative movement of a conductor layer and an insulating layer.
[Fig. 7] Fig. 7 is a partial schematic cross-sectional view showing a second embodiment of the present invention.
[Fig. 8] Fig. 8 is a partial schematic cross-sectional view showing a third embodiment of the present invention.
[Fig. 9] Fig. 9 is a partial schematic cross-sectional view showing a fourth embodiment of the present invention.
[Fig. 10] Fig. 10 is a partial schematic cross-sectional view showing a fifth embodiment of the present invention.

### DESCRIPTION OF THE REFERENCE NUMERALS

- 100: superconducting cable
- 110: core
- 10: former
- 30: conductor layer
- 50: insulating layer
- 60: shielding layer
- 70: protective layer
- 20: cushioning layer
- 41: inner semi-conductive layer
- 42: outer semi-conductive layer
- 55: distal end portion of insulating layer
- 120: heat insulating tube
- 121: corrugated inner tube
- 122: corrugated outer tube
- 130: corrosion-proof layer
- 210: coupling sleeve
- 211: former insertion hole
- 212: conductor insertion hole
- 220: holding member
- 221: metal tape winding layer
- 222: metal wire winding layer
- 225: distal end portion of holding member
- 230: reinforcing insulating layer
- 240: solder

### BEST MODE FOR CARRYING OUT THE INVENTION

Hereinafter, embodiments of the present invention will be described. Here, an intermediate coupling portion of superconducting cables will be described as an example. Prior to the description of a coupling structure according to the present invention, a construction of a superconducting cable which is to be coupled will be described.

### (Construction of Superconducting Cable)

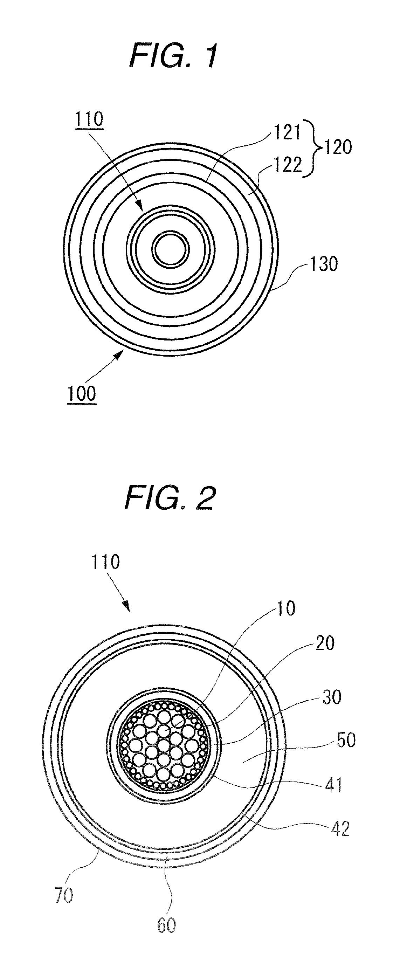

An alternating-current single-core superconducting cable was prepared as one of the examples of a superconducting cable used in a coupling structure according to the present invention. The cross-sectional view thereof is shown in Fig. 1, and a cross-sectional view of a core of the cable is shown in Fig. 2.

As shown in Fig. 1, the cable 100 includes a single core 110, and a heat insulating tube 120 which houses the core 110.

As shown in Fig. 2, the core 110 includes, in sequence from its center, a former 10, a cushioning layer 20, a conductor layer 30, an inner semi-conductive layer 41, an insulating layer 50, an outer semi-conductive layer 42, a shielding layer 60 and a protective layer 70. Among these layers, a superconducting wire material is used in the conductor layer 30 and the shielding layer 60. The superconducting wire material in the core 110 is kept in a superconducting state by flowing a cooling medium (e.g., liquid nitrogen) through a space between the heat insulating tube and the core.

A plurality of copper wires that are twisted together are used as the former 10. With the former of the twisted wire structure, a reduction of AC loss and a suppression of a temperature rise due to excess current can be achieved at the same time. In this embodiment, wires on an outer periphery side are finer than wires on a center side, whereby unevenness grooves appearing on an outer peripheral surface of the former 10 is made as small as possible.

The cushioning layer 20 is formed on the former 10. The cushioning layer 20 is formed by spirally winding a carbon paper on the former 10. The surface of the former 10 can be made smooth by the cushioning layer 20, and a damage due to a direct contact of the former 10 with the conductor layer 30 can be relieved.

Sheath tape wire material of Bi2223-based Ag-Mn having a thickness of 0.24 mm and a width of 3.8 mm is used as the conductor layer 30. The tape wire material is wound in layers on the cushioning layer 20 to form the conductor layer 30. In the conductor layer 30, each of the layers of superconducting wire material are different in twisting pitch from each other. In addition, the direction of winding is changed every layer or every two or more layers, whereby electric current that flows through each layer can be made uniform.

In sequence from an inner side, the inner semi-conductive layer 41, the insulating layer 50 and the outer semi-conductive layer 42 are formed on the outer periphery of the conductor layer 30. The inner and outer semi-conductive layers 41, 42 suppress a generation of a minute gap at the an between the conductor layer 30 and the insulating layer 50 or at an interface between the insulating layer 50 and the shielding layer 60, and prevent partial discharge from occurring in these gaps. A carbon paper may be used as these semi-conductive layers 41, 42. The insulating layer 50 may be formed by using, for example, a semi-synthetic paper (PPLP manufactured by Sumitomo Electric Industries, Ltd., a registered trademark thereof) formed by laminating a kraft paper and a resin film such as a polypropylene film, and the semi-synthetic paper may be wound on the outer periphery of the inner semi-conductive layer 41.

The shielding layer 60 is provided on the outer semi-conductive layer 42. The shielding layer 60 is formed by winding a superconducting wire material that is similar to the one used in the conductor layer 30. Electric current that is substantially equal to electric current flowing in the conductor layer 30 is induced in the shielding layer 60 in an opposite direction with respect to the conductor layer 30, thereby substantially canceling a magnetic field generated from the conductor layer 30, and preventing the magnetic field from leaking outside.

A kraft paper is wound on the shielding layer 60 to form the protective layer 70. The protective layer 70 mechanically protects the shielding layer 60, and also provides insulation from the heat insulating tube.

On the other hand, the heat insulating tube 120 has a double tube structure made of stainless steel, and includes a corrugated inner tube 121 and a corrugated outer tube 122 as shown in Fig. 1. Generally, a space is formed between the corrugated inner tube 121 and the corrugated outer tube 122, and the space is evacuated. A superinsulation serving as a heat insulating material (not shown) is provided inside the evacuated space, whereby a reflection of radiation heat is performed. A corrosion-proof layer 130 is formed on an outer side of the corrugated outer tube 122.

### (Coupling Structure)

### (Embodiment 1)

A coupling structure using the above superconducting cables is shown in Fig. 3. The coupling structure includes a pair of superconducting cables 100 arranged so as to be butted each other, a coupling sleeve 210 which couples the respective cables 100, holding members 220 each covering a conductor layer 30 exposed between an end portion of the coupling sleeve 210 and an end portion of an insulating layer 50, and a reinforcing insulating layer 230 covering the periphery of the coupling sleeve.

When forming the coupling portion, first, respective layers of each of the cables are removed in a stepped manner at the end portions thereof, thereby exposing a former 10, the conductor layer 30, the insulating layer 50 (including the inner and outer semi-conductive layers 41, 42) and a shielding layer 60 (not shown) in a stepped manner.

The exposed formers 10 as well as the exposed conductor layers 30 are coupled together by the coupling sleeve 210. The coupling sleeve 210 is a metal tube having a former insertion hole 211 formed at a middle portion thereof, and conductor insertion holes 212 formed at respective end portions thereof. The conductor insertion holes 212 are larger in inner diameter than the former insertion hole 211. The formers 10 are inserted from the opening on respective ends of the coupling sleeve 210 into the former insertion hole 211. At this time, the conductor layers 30 are inserted into the conductor insertion hole 212 with a gap, but is not inserted into the former insertion hole 211. A space S is provided between the respective end portions of the coupling sleeve 210 and the end portions of the respective insulating layers 50, and the conductor layers 30 are exposed at the region where the space S is provided.

In such a state, an outer periphery portion of the coupling sleeve 210 which corresponds to the former insertion hole 211 is compressed, thereby coupling the formers 10 and the coupling sleeve 210 in a compressed manner. Subsequently, the conductor layers 30 are coupled to the coupling sleeve 210. This coupling is performed by pouring a solder 240 into the gap that is formed between the respective conductor layers 30 and the conductor insertion hole 212, and then by solidifying the solder. The coupling of the conductor layers 30 to the coupling sleeve 210 is performed not by compression but by soldering, whereby mechanical damage to the superconducting wire material forming the conductor layers 30 is prevented.

Next, the conductor layers 30 that are exposed between the respective end portions of the coupling sleeve 210 and the end portions of the respective insulating layers 50 are covered with the holding members 220. For example, a mixture material composed of an epoxy resin serving as a base resin and glass short fibers may be coated on the outer periphery of the exposed conductor layers 30 while the base resin is kept in a molten condition, and may be solidified to form the holding members 220. Alternatively, a glass fiber tape may be wound on the exposed conductor layers 30 and a molten base resin may be coated and solidified thereon, thereby forming the holding members 220 in a similar manner. When an FRP holding members 220 are formed by winding the tape material, the conductor layers 30 can be more positively held toward the inner periphery side. In either of the above cases, the exposed conductor layers 30 may be covered with the holding members 220 over the entire periphery thereof.

Further, although not shown in the drawings, the shielding layers 60 of the respective cables are coupled together via a braided material. Then, an insulating paper is wound on the periphery of the coupling sleeve 210, that is, over a range from the vicinity of the end portion of the insulating layer of one cable to the vicinity of the end portion of the insulating layer of the other cable, thereby forming the reinforcing insulating layer 230. The reinforcing insulating layer 230 covers the coupling sleeve 210, and also covers the holding members 220, whereby sufficient insulation in the coupling structure is ensured.

Accordingly, the conductor layers 30 disposed between the respective end portions of the coupling sleeve 210 and the end portions of the respective insulating layers 50 are held by the holding members 220, whereby a buckling of the conductor layer 30s due to a relative movement of the conductor layer 30 and the insulating layer 50 can be suppressed even when thermal expansion or contraction occurs in the cable, e.g., a contraction at the time of cooling.

### (Embodiment 2)

Next, with reference to Fig. 7, an embodiment of the present invention in which a holding member formed into a tapered shape will be described. Fig. 7 is a schematic cross-sectional view showing a part of a coupling structure according to a second embodiment. Here, different points from the first embodiment will be mainly described, and explanations of the other constructions that are similar to those of the first embodiment will be omitted.

A holding member 220 according to this embodiment has a double layered structure in which a metal tape winding layer 221 is formed on a conductor layer 30 and a metal wire winding layer 222 is formed thereon. The holding member 220 is formed into a tapered shape in which a height (an outer diameter) thereof gradually decreases in a direction away from an end surface of a coupling sleeve 210.

The metal tape winding layer 221 is formed by winding a metal tape on the conductor layer 30. Here, a silverized copper tape is used as a metal tape. More specifically, the metal tape winding layer includes a cylindrical portion having substantially an uniform outer diameter on a side adjacent to the coupling sleeve 210, and a tapered portion having a diameter that gradually decreases towards the conductor layer 30 on a side away from the coupling sleeve 210. The cylindrical portion and the tapered portion are formed integrally and continuously. The metal tape is wound in layers, and turning-back positions of the winding is shifted sequentially to form the holding member 220. For example, the metal tape is wound in an overlapping manner from the coupling sleeve 210 side to form a first layer, and the metal tape is turned back at a region adjacent to the end portion of the insulating layer 50 so as to form a second layer. When the winding is turned back in a similar way from a third layer to a fourth layer, the winding is performed in such a manner that the turning-back position is shifted toward the coupling sleeve 210 side. Sequentially, the winding of the metal tape on the outer periphery is similarly repeated, thereby forming the metal tape winding layer 221 having part of an outer peripheral surface formed substantially in a conical surface. The metal tape winding layer 221 is formed to cover the entire space formed between the end surface of the coupling sleeve 210 and the end portion of the insulating layer 50.

On the other hand, the metal wire winding layer 222 is formed on the cylindrical portion of the metal tape winding layer 221. The metal wire winding layer 222 is formed by winding a metal wire of a small diameter on the cylindrical portion. Here, a silverized copper wire is used as a metal wire. When winding the metal wire, similarly to the tapered portion formed by the metal tape, the winding amount in the radial direction is larger on the coupling sleeve 210 side, and the winding amount in the radial direction is made to gradually decrease on a side away from the coupling sleeve 210, thereby forming the metal wire winding layer 222 such that an outer peripheral surface of the metal wire winding layer 221 becomes substantially a conical surface. The outer peripheral surface of the metal wire winding layer 222 has such an inclination that the outer peripheral surface is continuous with the outer peripheral surface of the tapered portion of the metal tape winding layer 221, and when the holding member 220 is viewed as a whole, the outer peripheral surface is formed to be a continuous conical surface.

The metal tape winding layer 221 and the metal wire winding layer 222 are fixed by soldering. Here, a low-melting solder is used in order to reduce a possibility that the insulating layer is deteriorated by a heat generated upon melting of the solder. Even when a solder having a higher melting point (melting point of 190°C) is used as a solder for fixing each winding layer, it has been examined that the deterioration of the insulating layer 50 will not occur in case where it is heated by a soldering iron or the like that is heated to about 200°C, since a heat capacity of the solder is small and a heating time is temporary. The metal tape winding layer 221 disposed at the lower layer is fixed by the solder, and then the metal wire winding layer 222 disposed at the upper layer is fixed by the solder. In this fixing operation using the solder, the metal tape winding layer 221 and the metal wire winding layer 222 can both be prevented from becoming loose.

With the holding member 220 according to this embodiment, the conductor layer 30 can be effectively held by winding the metal tape and the metal wire. Also, since the holding member 220 is formed into a tapered shape, and there are substantially no corner portions so that the concentration of an electric field on the periphery of the holding member 220 can be relieved. Furthermore, since the metal tape and the metal wire are used in combination, a time required for the winding operation can be reduced as compared with the case where the holding member 220 is formed only by a metal wire. Particularly, the metal wire winding layer 222 may easily be formed to have a smooth tapered outer surface by using the metal wire of a small diameter.

### (Embodiment 3)

With reference to Fig. 8, another embodiment of the present invention will be described in which a holding member formed into a tapered shape is employed. Fig. 8 is a schematic cross-sectional view showing a part of a coupling structure according to a third embodiment. Here, different points from the first and second embodiments will be mainly described, and explanations of the other constructions that are similar to those of the first and second embodiments will be omitted.

Respective distal end portions of an insulating layer 50 and a holding member 220 according to this embodiment are penciling-formed, and a insulating layer distal end portion 55 and a holding member distal end portion 225 are thus formed. Here, "penciling-formed" means that each end portion of respective members is formed to have an outer peripheral surface of a conical and tapered shape, and an outer peripheral surface of the distal end portion of the tapered portion is formed into a cylindrical shape having a winding structure of about ten layers.

In the holding member 220 according to the embodiment has a double layered structure in which a metal tape winding layer 221 is formed on a conductor layer 30 and further a metal wire winding layer 222 is formed thereon. A part of the holding member distal end portion 225 that is penciling-formed from an end surface of a coupling sleeve 210 toward the insulating layer 50 extends to the underside of the penciling-formed distal end portion 55 of the insulating layer. The insulation layer distal end portion 55 may have a winding structure including, for example, ten layers. The extended holding member distal end portion 225 of the holding member 220 is formed into a cylindrical shape having substantially an uniform outer diameter.

The insulating layer 50 is formed by winding an insulating tape (for example, PPLP (registered trademark of Sumitomo Electric Industries, Ltd.)). The penciling-formed insulating layer distal end portion 55 of the insulating layer 50 is partially unwound by a manual operation. The holding member distal end portion 225 is formed to be partially extended beyond a width of the exposed portion of the conducting layer 30, which is exposed for coupling the superconducting cables, toward the insulating layer distal end portion 55. After forming the holding member 220 including the holding member distal end portion 225, the unwound insulating tape of the insulating layer distal end portion 55 is rewound on the holding member distal end portion 225 so as to overlap thereto, thereby forming the insulating layer distal end portion 55. The rewound insulating layer distal end portion 55 is also formed into a cylindrical shape having substantially an uniform outer diameter.

The holding member distal end portion 225 of the holding member 220 according to this embodiment is formed to partially extend to the underside of the insulating layer distal end portion 55, whereby the width of the holding member 220 can be made larger than a space S where the conductor layer 30 is exposed for coupling the superconducting cable. With this construction, even when the conductor layer 30 and the insulating layer 50 are displaced relative to each other due to a thermal expansion or contraction after the formation of the coupling portion and the space S increases from its initial state, the possibility of the conduction layer 30 being exposed can be suppressed. Therefore, the possibility of a buckling of the conductor layer 30 caused by the relative displacement between the conductor layer 30 and the insulating layer 50 due to a thermal expansion or contraction of the cable can be reduced. Furthermore, the holding member 220 can be fixed more firmly.

### (Embodiment 4)

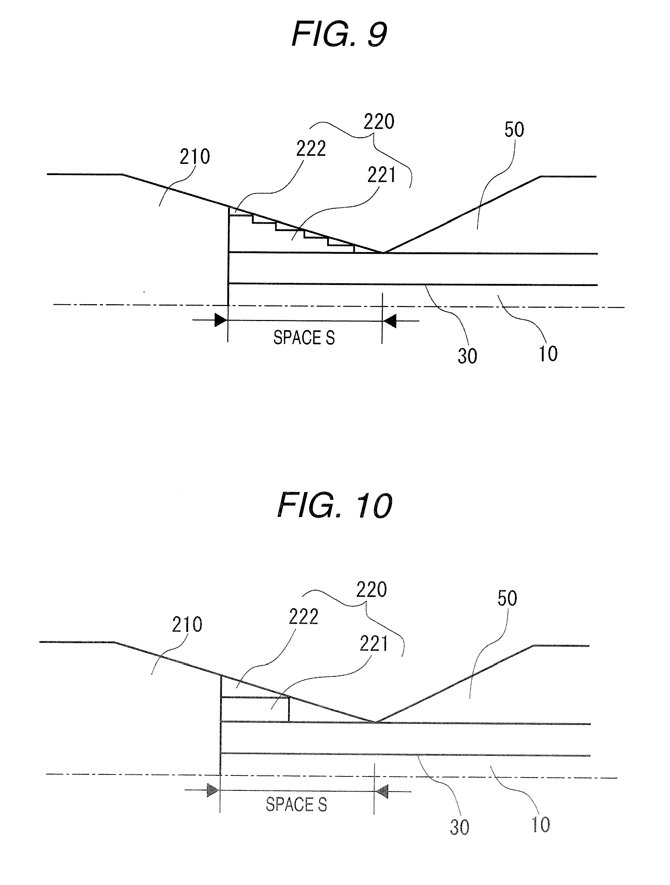

With reference to Fig. 9, another embodiment of the present invention will be described in which a holding member is formed into a tapered shape. Fig. 9 is a schematic cross-sectional view showing a part of a coupling structure according to a fourth embodiment. Here, different points from the first to third embodiments will be mainly described, and explanations of the other constructions that are similar to those of the first to third embodiments will be omitted.

A holding member 220 according to this embodiment has a double layered structure in which a metal tape winding layer 221 is formed on a conductor layer 30 and a metal wire winding layer 222 is formed thereon. The holding member is formed into a tapered shape in which a height (an outer diameter) thereof gradually decreases in a direction away from an end surface of a coupling sleeve 210.

The metal tape winding layer 221 is formed by winding a metal tape on the conductor layer 30. More specifically, the metal tape winding layer 221 is formed into a stair-like shape with a plurality of steps such that a diameter thereof becomes smaller in a direction away from the coupling sleeve 210 towards the conductor layer 30. The adjacent steps are formed integrally with each other. For example, the metal tape is wound in layers, and turning-back positions of the winding is shifted sequentially to form the metal tape winding layer 221. Taking it into consideration that the holding member 220 needs to be formed into the tapered shape, the metal tape winding layer 221 is formed into a downward stair-like shape toward an insulating layer 50 when viewed in a longitudinal cross-section. By reducing the number of the winding layers of the metal tape for each of the steps, the tapered winding layer surface of the metal tape winding layer 221 can be made smooth.

The metal wire winding layer 222 is wound so as to fill in the stair-like steps formed by the metal tape winding layer 221. The metal wire winding layer 222 is formed to cover the entire space S formed between the end surface of the coupling sleeve 210 and the end portion of the insulating layer 50. The holding member 220 is formed to have an outer peripheral surface of a continuous conical shape when it is viewed as a whole.

In the holding member 220 according to this embodiment, the rough tapered shape is formed by the metal tape winding layer 221, whereby the winding number of the metal wire winding layer 222 can be greatly reduced so that working efficiency can be enhanced. Incidentally, the holding member 220 and the insulating layer 50 may be penciling-formed as described in the third embodiment, so that the holding member 220 is formed to extend to the underside of the insulating layer 50.

### (Embodiment 5)

With reference to Fig. 10, another embodiment of the present invention will be described in which a holding member is formed into a tapered shape. Fig. 10 is a schematic cross-sectional view showing a part of a coupling structure according to a fifth embodiment. Here, different points from the first to third embodiments will be mainly described, and explanations of the other constructions that are similar to those of the first to third embodiments will be omitted.

A holding member 220 according to this embodiment has a double layered structure in which a metal tape winding layer 221 is formed on a conductor layer 30 a metal wire winding layer 222 is formed thereon. The holding member is formed into a tapered shape in which a height (an outer diameter) thereof gradually decreases in a direction away from an end surface of a coupling sleeve 210.

The metal tape winding layer 221 is formed by winding a metal tape on the conductor layer 30. More specifically, the metal tape is wound in layers such that the metal tape is not displaced in a radial direction, thereby forming the metal tape winding layer into a cylindrical shape having substantially an uniform outer diameter.

On the other hand, the metal wire winding layer 222 is formed so as to cover the cylindrical metal tape winding layer 221. When winding the metal wire, the metal wire is wound on the cylindrical portion of the metal tape winding layer 221 such that the winding amount in the radial direction on a coupling sleeve 210 side is made larger, and the winding amount in the radial direction is made to gradually decrease toward a corner portion of the metal tape winding layer 221. Then, a metal wire is wound on the conductor layer 30 such that the winding amount in the radial direction at a region adjacent to the corner portion of the metal tape winding layer 221 is made larger, and the winding amount in the radial direction is made to gradually decrease toward an insulating layer 50. An outer peripheral surface of the metal wire winding layer 222 is formed into a smooth tapered shape. The metal wire winding layer 222 may be formed separately on the metal tape winding layer 221 and on the side of the metal tape winding layer, or may be formed continuously in the direction from the coupling sleeve 210 toward the insulating layer 50. The holding member 220 is formed to have an outer peripheral surface of a continuous conical shape when it is viewed as a whole.

In the holding member 220 according to this embodiment, the metal tape winding layer 221 is formed into the cylindrical shape, whereby the winding of the metal tape can be easily performed. Furthermore, since no tapered end portions in which the number of winding of the metal tape is small are not formed, the metal tape winding layer 221 is less liable to become loose. Incidentally, the holding member 220 and the insulating layer 50 may be penciling-formed as described in the third embodiment so that the holding member is formed so as to partially extend to the underside of the insulating layer 50.

Although the present invention has been described in detail with reference to the specific embodiments, it is apparent to those skilled in the art that various changes and modifications can be added without departing from the spirits and scope of the present invention.

The present Application is based on Japanese Patent Application filed on October 14, 2004 (Patent Application No. 2004-300573, and Japanese Patent Application filed on December 7, 2004(Patent Application No. 2004-354692), and contents thereof are incorporated herein by reference.

### INDUSTRIAL APPLICABILITY

The present invention can be effectively utilized as a coupling structure of a superconducting cable that are used, for example, in transporting electric power. The superconducting cable may be either a single-core or a multicoaxial type, and also may be either an AC type or a DC type.

## Claims

1. A coupling structure of a superconducting cable, the coupling structure being formed at an end portion of the superconducting cable having a superconducting layer and an outer peripheral layer formed thereon; the coupling structure comprising:
a coupling member coupled to the superconducting layer; and
a holding member which covers the superconducting layer at a region between an end portion of the coupling member and an end portion of the outer peripheral layer so as to prevent a buckling of the superconducting layer due to a relative movement between the superconducting layer and the outer peripheral layer.

2. The coupling structure of a superconducting cable according to claim 1, wherein the holding member is formed by a fiber reinforced plastic, a metal wire or a metal tape.

3. The coupling structure of a superconducting cable according to claim 1, wherein the holding member has a winding structure formed by at least one of a metal wire and a metal tape.

4. The coupling structure of a superconducting cable according to claim 1, wherein an outer peripheral surface of the holding member has a tapered shape.

5. The coupling structure of a superconducting cable according to claim 1, wherein the holding member is fixed to the superconducting layer by soldering.

6. The coupling structure of a superconducting cable according to claim 1, wherein the holding member is formed so as to extend to an underside of an end portion of the outer peripheral layer.
